# EUROPÄISCHE PATENTSCHRIFT

(11) **EP 3 854 730 B1**
(45) Veröffentlichungstag und Bekanntmachung des Hinweises auf die Patenterteilung: **20.03.2024**
(21) Anmeldenummer: 20153597.8
(22) Anmeldetag: 24.01.2020
(51) Int. Cl.: B65G 47/32, G01B 5/08, B65G 1/137, B65G 47/91

(54) **VORRICHTUNG UND VERFAHREN ZUM IDENTIFIZIEREN, VERMESSEN UND POSITIONIEREN VON STÜCKGÜTERN**
DEVICE AND METHOD FOR IDENTIFYING, MEASURING AND POSITIONING PIECE GOODS
DISPOSITIF ET PROCÉDÉ D'IDENTIFICATION, DE MESURE ET DE POSITIONNEMENT DE MARCHANDISES DE DÉTAIL

(43) Veröffentlichungstag der Anmeldung: 28.07.2021
(73) Patentinhaber: Becton Dickinson Rowa Germany GmbH, 53539 Kelberg (DE)
(72) Erfinder: HELLENBRAND, Christoph, 56761 Kaifenheim (DE)
(74) Vertreter: Zenz Patentanwälte Partnerschaft mbB

(56) Entgegenhaltungen:
- EP-A1- 1 748 004
- EP-A2- 2 194 008
- EP-A2- 3 006 379
- DE-A1- 4 318 341

## Beschreibung

Die vorliegende Erfindung betrifft eine Vorrichtung sowie ein Verfahren zum Identifizieren, Vermessen und Positionieren von Stückgütern, insbesondere Arzneimittelpackungen.

Aus dem Stand der Technik sind vorgenannte Vorrichtungen und entsprechende Verfahren bekannt. Mit diesen werden Stückgüter, beispielsweise Arzneimittelpackungen, die ungeordnet und in großer Zahl bereitgestellt werden, vereinzelt, identifiziert und für eine automatische Einlagerung bereitgestellt. Nachteilig bei den bekannten Vorrichtungen und Verfahren ist es, dass diese einen relativ geringen Durchsatz haben, der für große Stückgutmengen (und dementsprechend große Stückgutlager) nicht ausreichend ist. Nachteilig ist bei bekannten Vorrichtungen und Verfahren ferner, dass mit diesen separierte Stückgüter nur sequenziell einer Lagerung zugeführt werden können, was ein Grund für den geringen Durchsatz ist. Eine entsprechende Vorrichtung ist beispielsweise aus der EP 3 006 379 A2 bekannt, welche eine Vorrichtung nach dem Oberbegriff des Anspruchs 1 offenbart. Diese Vorrichtung umfasst eine Förderrinne für einen Kommissionierautomaten für Apotheken, wobei sich die Förderrinne in eine Förderrichtung erstreckt. An die Förderrinne schließt sich ein Drehteller an, von welchem Medikamentenschachteln auf einen Lift gelangen.

Es ist Aufgabe der vorliegenden Erfindung, eine Vorrichtung sowie ein Verfahren zum Identifizieren, Vermessen und Positionieren von Stückgütern bereitzustellen, bei welchen die Bearbeitungsgeschwindigkeit und Flexibilität erhöht sind.

Gelöst wird diese Aufgabe zunächst durch eine Vorrichtung gemäß Anspruch 1. Die erfindungsgemäße Vorrichtung zum Identifizieren, Vermessen und Positionieren von Stückgütern, insbesondere Arzneimitteln, umfasst einen optisch transparenten Drehteller mit einer sich in einer X- und Y-Richtung der Vorrichtung erstreckenden Auflagefläche für Stückgüter, wobei dieser Drehteller mit einem mit einer Steuereinrichtung gekoppelten Drehantrieb zusammenwirkt und um eine sich in Z-Richtung erstreckende Drehachse drehbar ist, wobei sich die Z-Richtung orthogonal zu der X- und Y-Richtung erstreckt und wobei die X-Richtung der Längs- und die Y-Richtung der Querachse der Vorrichtung entspricht. Die Vorrichtung umfasst ferner eine erste Fördereinrichtung zum Anordnen eines Stückgutes auf der Auflagefläche des Drehtellers sowie eine in Z-Richtung unterhalb des Drehtellers angeordnete und mit der Steuereinrichtung gekoppelte erste optische Leseeinrichtung zum Erfassen der X-, Y-Dimensionen des auf der Auflagefläche aufliegenden Stückguts sowie eines Identifizierers auf einer der Auflagefläche zugewandten Seitenfläche des aufliegenden Stückgutes.

Bei der ersten optischen Leseeinrichtung kann es sich beispielsweise um eine Kamera handeln, die ein Bild der der Auflagefläche zugewandten Seitenfläche erstellt, welches ggf. an die Steuereinrichtung weitergeleitet wird, welche das erhaltene Bild im Hinblick auf die X-, Y-Dimensionen und das Vorhandensein eines Identifizierers untersucht. Alternativ kann die Leseeinrichtung selbst die vorgenannte Analyse des Bildes vornehmen und die Ergebnisse an die Steuereinrichtung weiterleiten. Mit Hilfe des Identifizierers kann eindeutig bestimmt werden, welches Arzneimittel in welcher Abgabeform auf dem Drehteller angeordnet wurde. Bei dem Identifizierer kann es sich beispielsweise um einen Barcode handeln. Alternativ kann als optische Leseeinrichtung auch ein Laser verwendet werden, welcher eine Seitenfläche abtastet.

Die Vorrichtung umfasst darüber hinaus eine ebenfalls mit der Steuereinrichtung gekoppelte zweite optische Leseeinrichtung zum Erfassen der Z-Dimension (also der Höhe) des auf der Auflagefläche aufliegenden Stückgutes sowie eines Identifizierers auf einer zur Auflagefläche orthogonalen Seitenfläche. Auch bei dieser zweiten optischen Leseeinrichtung kann es sich beispielsweise um eine Kamera handeln, die wie bereits oben beschrieben arbeitet. Stromab des Drehtellers ist ein Ablagebereich für eine Mehrzahl von Stückgütern bereitgestellt, wobei die Anordnung des Drehtellers sowie des Ablagebereiches zueinander die Längsachse der Vorrichtung definiert.

Der Ablagebereich kann durch eine Vielzahl von Einrichtungen bereitgestellt werden. Beispielsweise durch ein Förderband einer Einlagerungseinrichtung. Der Ablagebereich ist dann kein fester Abschnitt des Förderbandes, sondern wird stets durch den Abschnitt bzw. die Auflagefläche des Förderbandes bereitgestellt, der/die sich in einem vorgegebenen Abschnitt befindet, auf welchen die zweite Fördereinrichtung zugreifen kann. Alternativ kann eine verschiebbare Ablageplatte den Ablagebereich bereitstellen oder, im einfachsten Fall, ein unbeweglicher Ablagetisch.

Die erfindungsgemäße Vorrichtung umfasst schließlich eine mit der Steuereinrichtung gekoppelte zweite Fördereinrichtung mit einem Greifmittel für Stückgüter, wobei das Greifmittel zumindest in X- und Y-Richtung derart in den Ablagebereich bewegbar ist, dass Stückgüter in X- und/oder Y-Richtung nebeneinander in dem Ablagebereich angeordnet werden können.

Erfindungsgemäß umfasst die erste Fördereinrichtung als ein in X-, Y- und Z-Richtung bewegbares Greifmittel.

Die erfindungsgemäße Vorrichtungen umfasst zwei Fördereinrichtungen, wobei die erste erfindungsgemäß dazu ausgelegt ist, ein Stückgut von einer beliebig ausgestalteten Bereitstellungseinrichtung aufzunehmen und dem Drehteller zuzuführen, auf welchem die Identifizierung des Stückgutes erfolgt, wohingegen die zweite Fördereinrichtung dazu vorgesehen ist, das Stückgut nach erfolgter Identifizierung und Vermessung aufzunehmen und in dem Ablagebereich anzuordnen. Erfindungsgemäß ist die zweite Fördereinrichtung derart gestaltet, dass sie sowohl in X- als auch in Y-Richtung so über den Ablagebereich bewegbar ist, dass das von der zweiten Fördereinrichtung ergriffene Stückgut bei einer beliebigen Position des Ablagebereichs angeordnet werden kann.

Der Ablagebereich ist erfindungsgemäß so dimensioniert, dass mehrere Stückgüter "üblicher" Größe in X- und/oder Y-Richtung der Vorrichtung nebeneinander angeordnet werden können. Dies ermöglicht es, dass von einem nicht zu der erfindungsgemäßen Vorrichtung selbst gehörenden Greifer einer Kommissioniervorrichtung für Stückgüter mehrere Stückgüter in einem Greifvorgang in dem Ablagebereich bzw. von diesem aufgenommen werden können. Dies ist bei Vorrichtungen nach dem Stand der Technik nicht möglich, da die identifizierten Stückgüter bedingt durch die Limitationen der bekannten Vorrichtungen stets nacheinander bei der gleichen Position angeordnet werden, d. h. identifizierte Stückgüter nur sequenziell, also eins nach dem anderen, ergriffen und eingelagert werden können.

Der Durchsatz der erfindungsgemäßen Vorrichtung ist zum einen dadurch erhöht, dass zwei Fördereinrichtungen verwendet werden - die eine zum Anordnen von Stückgütern auf dem Drehteller, die andere zum Ergreifen von Stückgütern von dem Drehteller und Anordnen in dem Ablagebereich. Aufgrund der erfindungsgemäßen Ausgestaltung der zweiten Fördereinrichtung ist es im Hinblick auf die Ablage möglich, Stückgüter auch so anzuordnen, dass eine Mehrzahl von Stückgütern gleichzeitig ergriffen werden kann, was wiederum den Durchsatz der Vorrichtung und die Einlagerungsgeschwindigkeit der regelmäßig nachgeschalteten Kommissioniervorrichtung erhöht.

Bei der erfindungsgemäßen Vorrichtung ist eine erste optische Leseeinrichtung unterhalb des Drehtellers und eine zweite optische Leseeinrichtung seitlich des Drehtellers angeordnet. Sofern bei dem auf dem Drehteller aufliegenden Stückgut der Identifizierer auf der dem Drehteller zugewandten "unteren" Seitenfläche des Stückgutes oder auf einer der orthogonal zu der unteren Seitenfläche des Stückgutes ausgebildeten Seitenflächen angeordnet ist, ist mit den beiden vorgenannten Leseeinrichtungen eine Identifikation des Stückgutes möglich. Lediglich für den Fall, dass auf dem Stückgut nur ein Identifizierer angeordnet ist, der bedingt durch das Ablegen des Stückgutes auf der der Oberfläche des Drehtellers abgewandten Seitenfläche des Stückgutes angeordnet ist, kann mit den zwei Leseeinrichtungen keine Identifizierung erfolgen, so dass eine Neupositionierung des Stückgutes auf dem Drehteller notwendig ist. Um dies vermeiden zu können, ist es bei einer bevorzugten Ausführungsform der Erfindung vorgesehen, dass die Vorrichtung eine in Z-Richtung oberhalb des Drehtellers angeordnete und mit der Steuereinrichtung gekoppelte dritte optische Leseeinrichtung zum Erfassen der Dimensionen des auf der Auflagefläche aufliegenden Stückgutes und/oder eines Identifizierers auf einer der Auflagefläche abgewandten Seitenfläche aufweist.

Bei der erfindungsgemäßen Vorrichtung werden die Stückgüter mit der ersten Fördereinrichtung auf dem Drehteller angeordnet. Wie genau das Ergreifen eines Stückgutes erfolgt, ist für die vorliegende Erfindung nicht wesentlich. Regelmäßig wird jedoch ein Ergreifen eines Stückgutes aus einer Mehrzahl von auf einer Bereitstellungseinrichtung aufliegenden Stückgütern erfolgen, wobei die Fördereinrichtung ein Stückgut nicht stets bei einer bevorzugten Seitenfläche aufnimmt (beispielsweise der größten Seitenfläche des Stückgutes), sondern bei der Seitenfläche, die zum Aufnehmen des Stückgutes am geeignetsten ist. Daraus folgt, dass es ungewiss ist, in welcher Anordnung das Stückgut von der ersten Fördereinrichtung ergriffen wird, d. h. es kann vorkommen, dass ein Stückgut beispielweise bei einer Stirnfläche oder bei einer nicht-größten Seitenfläche des Stückgutes ergriffen wird. Die Stückgüter werden also nicht stets mit derselben Seitenfläche auf dem Drehteller angeordnet, beispielsweise nicht stets mit der größten Seitenfläche des Stückgutes, sondern in Abhängigkeit davon, wie sie von der Fördereinrichtung bzw. deren Greifmittel aufgenommen werden. Regelmäßig ist es aber bevorzugt, dass Stückgüter auf der größten Seitenfläche aufliegend eingelagert werden, wozu es notwendig ist, dass die Stückgüter auf eben dieser größten Seitenfläche auf dem Drehteller aufliegen.

Um dies erreichen zu können, ist es notwendig, die Ausrichtung des mit der ersten Fördereinrichtung gegriffenen bzw. abgelegten Stückgutes zu kennen. Dazu ist es bei einer bevorzugten Ausführungsform der erfindungsgemäßen Vorrichtung vorgesehen, dass diese eine optische Groberfassungseinrichtung, beispielsweise eine 2D- oder 3D-Kamera, zum Ermitteln der räumlichen Ausrichtung eines Stückgutes umfasst. Die räumliche Ausrichtung kann beispielsweise nach dem Ergreifen eines Stückgutes ermittelt werden. Wird bei dem Ermitteln der räumlichen Ausrichtung beispielsweise festgestellt, dass ein Stückgut auf eine nicht-größte Seitenfläche abgestellt wird bzw. wurde, also eine nicht-größte Seitenfläche der Auflagefläche des Drehtellers zugewandt ist, kann das Stückgut basierend auf der Kenntnis der räumlichen Ausrichtung von beispielsweise der ersten oder zweiten Fördereinrichtung derart umpositioniert werden (beispielsweise durch einfaches Umstoßen direkt nach dem Ablegen), dass das Stückgut auf seiner größten Seitenfläche aufliegt.

Gelegentlich kann es vorkommen, dass bei einem Stückgut der auf einer Seitenfläche angeordnete Identifizierer beispielsweise durch Transportschäden derart beeinträchtigt ist, dass eine Identifikation eines Stückgutes nicht möglich ist. Bei einer bevorzugten Ausführungsform ist es daher vorgesehen, dass zwischen dem Drehteller und der Ablagefläche eine Verwerfeinrichtung zum Abführen von Stückgütern angeordnet ist. Dabei kann es sich beispielsweise um eine in Z-Richtung schwenkbare Klappe handeln, die zum Abführen eines Stückgutes geöffnet wird, wenn ein Identifizieren nicht möglich ist.

Die genaue Ausgestaltung der ersten und/oder zweiten Fördereirichtung, insbesondere deren Greifmittel, ist für die vorliegende Erfindung nicht wesentlich. Bei einer bevorzugten Ausführungsform der vorliegenden Erfindung ist es jedoch vorgesehen, dass die erste und/oder die zweite Fördereinrichtung als in X-, Y- und/oder Z-Richtung bewegbare/-r Sauggreifer ausgebildet ist bzw. sind. Durch die Ausführung als Sauggreifer wird bei der ersten Fördereinrichtung insbesondere das Aufnehmen von Stückgütern aus einer Mehrzahl von Stückgütern erleichtert, da, im Gegensatz beispielsweise zu Klemmgreifern, ein enges Nebeneinanderliegen von Stückgütern einem Abgreifen eines Stückgutes nicht im Wege steht. Indem insbesondere die zweite Fördereinrichtung bzw. das Greifmittel dieser Fördereinrichtung, auch in Z-Richtung bewegbar ist, ist es möglich, Stückgüter auf der Auflagefläche auch übereinander anzuordnen. Dies kann beispielsweise bei identischen Arzneimittelpackungen sinnvoll sein, wenn diese erfahrungsgemäß sehr häufig und/oder stets mehrfach auszulagern sind.

Die Dimensionen und Gewichte der mit der Vorrichtung zu händelnden Stückgüter können stark voneinander abweichen, d. h. es können schwere kleine und große leichte Stückgüter vorhanden sein. Um einen Sauggreifer optimal an die unterschiedlich dimensionierten und unterschiedlich schweren Stückgüter anzupassen, ist es bei einer bevorzugten Ausführungsform vorgesehen, dass ein Sauggreifer zumindest zwei unterschiedlich dimensionierte Saugköpfe aufweist.

Bei einer alternativen bevorzugten Ausführungsform ist es vorgesehen, dass die zweite Fördereinrichtung als ein zumindest in X- und Y-Richtung bewegbarer Klemmgreifer ausgebildet ist. Die Verwendung eines Klemmgreifers ist insbesondere dann sinnvoll, wenn es sich um relativ große und schwere Stückgüter handelt, deren Ergreifen mit einem Sauggreifer problematisch ist.

Wie genau die Stückgüter der ersten Fördereinrichtung bereitgestellt werden, ist für die vorliegende Erfindung nicht wesentlich. Bei einer bevorzugten Ausführungsform ist es jedoch vorgesehen, dass die Vorrichtung eine Bereitstellungseinrichtung sowie eine in Z-Richtung oberhalb der Bereitstellungseinrichtung angeordnete Lageerfassungseinrichtung umfasst. Bei der Lageerfassungseinrichtung handelt es sich regelmäßig um eine 3D-Kamera, mit welcher die Positionierungen verschiedener Stückgüter in einer Mehrzahl von Stückgütern erfasst werden können. Mittels der mit der Lageerfassungseinrichtung gekoppelten Steuereinrichtung kann eine nächste optimale Angreiffläche eines Stückgutes ermittelt werden, über welche das Stückgut aus der Mehrzahl von Stückgütern entnommen werden kann. Bei der erfindungsgemäßen Ausführungsform ist es möglich, ohne Mitwirken eines Benutzers eine Mehrzahl von Stückgütern mittels der Bereitstellungseinrichtung anzubieten, die dann vollautomatisch vereinzelt, identifiziert und in dem Ablagebereich zur späteren Einlagerung angeordnet werden.

Die Aufgabe wird ferner gelöst durch ein Verfahren gemäß Patentanspruch 9. Bei dem erfindungsgemäßen Verfahren zum Identifizieren, Vermessen und Positionieren von Stückgütern wird a) ein einzelnes Stückgut mit einer ersten Fördereinrichtung auf einer ersten Seitenfläche auf einer sich in X- und Y-Richtung erstreckenden Auflagefläche eines optisch transparenten Drehtellers angeordnet, wobei die erste Fördereinrichtung ein in X-, Y- und Z-Richtung bewegbares Greifmittel umfasst, wobei der Drehteller mit einem mit einer Steuereinrichtung gekoppelten Drehantrieb zusammenwirkt und um eine sich in Z-Richtung erstreckende Drehachse drehbar ist, wobei sich die Z-Richtung orthogonal zu der X- und Y-Richtung erstreckt und wobei die X-Richtung der Längs- und die Y-Richtung der Querachse der Vorrichtung entspricht. In Schritt b) wird mit einer in Z-Richtung unterhalb des Drehtellers angeordneten ersten optischen Leseeinrichtung die erste Seitenfläche abgetastet und es werden die X-, Y-Dimensionen des auf der Ablagefläche aufliegenden Stückgutes ermittelt und bestimmt, ob bei der Abtastung der ersten Seitenfläche ein Identifizierer ermittelt wurde. In Schritt c) wird mit einer zweiten optischen Leseeinrichtung eine orthogonal zu der ersten Seitenfläche ausgebildete und der zweiten optischen Leseeinrichtung zugewandte zweite Seitenfläche abgetastet und die Z-Dimension (also die Höhe) des auf der Auflagefläche aufliegenden Stückgutes ermittelt. Sofern bei der ersten Seitenfläche kein Identifizierer ermittelt wurde, wird bestimmt, ob bei der Abtastung der zweiten Seitenfläche ein Identifizierer ermittelt wurde, wobei die Schritte b) und c) gleichzeitig oder zeitlich versetzt durchgeführt werden können.

Zunächst wird also die "untere" Seitenfläche und eine zu dieser orthogonal ausgebildete Seitenfläche des Stückgutes, bei welchem es sich insbesondere um eine Arzneimittelpackung handeln kann, vermessen und im Hinblick auf einen Identifizierer abgetastet. Sofern bei der unteren ersten Seitenfläche und der orthogonal zu der unteren Seitenfläche angeordneten zweiten Seitenfläche kein Identifizierer ermittelt werden kann, wird in einem Schritt d) der Drehteller so gedreht, dass eine nächste zur ersten Seitenfläche senkrechte Seitenfläche der zweiten optischen Leseeinrichtung zugewandt ist und mit der zweiten Leseeinrichtung die nächste Seitenfläche abgetastet und bestimmt wird, ob bei der Abtastung der nächsten Seitenfläche ein Identifizierer ermittelt wurde. Dieser Schritt d) wird erfindungsgemäß so oft wiederholt, bis drei nächste Seitenflächen abgetastet oder ein Identifizierer ermittelt wurde. Für den Fall, dass kein Identifizierer ermittelt wurde, wird in einem Verfahrensschritt e) das Stückgut von dem Drehteller entfernt und einer weiteren Verwendung zugeführt. Sobald ein Identifizierer und ggf. sämtliche Dimensionen des aufliegenden Stückgutes ermittelt sind, wird von einer Steuereinrichtung anhand der Dimensionen und/oder ggf. des Identifizierers ein Ablageort in einem Ablagebereich, der stromab des Drehtellers angeordnet ist, bestimmt. Eine solche Bestimmung ist notwendig, da es mittels des erfindungsgemäßen Verfahrens möglich sein soll, Stückgüter derart in dem Ablagebereich anzuordnen, dass mehrere Stückgüter gleichzeitig aus diesem entfernt werden können. Wie genau die Stückgüter dazu in dem Ablagebereich angeordnet werden, ist zum einen abhängig von den Dimensionen des bzw. der bereits auf der Auflagefläche aufliegenden Stückgutes bzw. Stückgüter sowie der Entnahmerichtung eines Greifers, mit welchem eine Mehrzahl von Stückgütern entnommen werden kann.

Nach dem Bestimmen des Ablageortes des Stückgutes in dem Ablagebereich wird dieses mit einem Greifmittel einer zweiten Fördereinrichtung ergriffen und zu dem Ablageort bewegt, wozu das Greifmittel in X- und ggf. Y- und Z-Richtung bewegt wird.

Wesentlich bei dem erfindungsgemäßen Verfahren ist, dass die Stückgüter nach dem Identifizieren mittels der zweiten Fördereinrichtung nicht einfach auf einen stets gleichen Ablageort bewegt werden, von welchem sie fortbewegt oder abgegriffen werden, sondern dass mittels der Steuereinrichtung ein Ablageort in dem Ablagebereich bestimmt wird, und zwar in Abhängigkeit von den Dimensionen des abzulegenden Stückgutes und der ggf. bereits abgelegten Stückgüter sowie der Entnahmerichtung. Dadurch kann erreicht werden, dass eine Mehrzahl von Stückgütern derart nebeneinander angeordnet wird, dass diese mit einem Greifer gleichzeitig ergriffen werden können. Wie genau die Anordnung der Stückgüter zu erfolgen hat, hängt dabei davon ab, wie der Greifer auf die Stückgüter zugreift, ob er beispielsweise entlang der X- oder Y-Richtung in den Raum oberhalb der Ablagefläche bewegt wird.

Um sicherzustellen, dass auch für den Fall, dass das Stückgut lediglich einen Identifizierer aufweist, ein Umlagern des Stückgutes zum Erkennen des Identifizierers nicht notwendig ist, ist es bei einer bevorzugten Ausführungsform vorgesehen, dass in Verfahrensschritt b) mit einer in Z-Richtung oberhalb des Drehtellers angeordneten dritten optischen Leseeinrichtung eine dieser Leseeinrichtung zugewandte Seitenfläche eines auf dem Drehteller aufliegenden Stückgutes abgetastet und ggf. die X- ,Y-Dimensionen des auf der Auflagefläche aufliegenden Stückgutes ermittelt werden und bestimmt wird, ob bei der Abtastung der Seitenfläche ein Identifizierer ermittelt wurde.

Um bereits vor dem Ablegen des Stückgutes zu erkennen in welcher Ausrichtung das Stückgut gegriffen ist, ist es bei einer bevorzugten Ausführungsform des erfindungsgemäßen Verfahrens vorgesehen, dass im Verfahrensschritt a) vor dem Anordnen des Stückgutes auf der Auflagefläche des Drehtellers mittels einer Groberfassungseinrichtung die räumliche Ausrichtung des von der ersten Fördereinrichtung gehaltenen Stückgutes ermittelt wird. Sobald die räumliche Ausrichtung ermittelt ist, kann die Steuereinrichtung bereits damit beginnen, den optimalen Ablageort in dem Ablagebereich zu bestimmen.

Sofern eine Groberfassungseinrichtung verwendet wird, ist es bei einer bevorzugten Ausführungsform des Verfahrens vorgesehen, dass die Groberfassungseinrichtung als optische Leseeinrichtung ausgebildet ist und das Stückgut bei Ermittlung der räumlichen Ausrichtung auch zum Erkennen eines Identifizierers abgetastet wird. In Abhängigkeit von der Ausrichtung des Identifizierers kann es vorkommen, dass mit der Groberfassungseinrichtung auch bereits ein Identifizierer abgetastet werden kann. Dies spart für die nachfolgenden Verfahrensschritte Zeit, das Verfahren kann so beschleunigt werden.

Regelmäßig ist es gewünscht, dass Stückgüter auf der größten Seitenfläche aufliegend eingelagert werden. Da es bei dem Ergreifen der Stückgüter mittels der ersten Fördereinrichtung aber nicht sichergestellt ist, dass die Stückgüter mittels der ersten Fördereinrichtung so ergriffen werden, dass diese auf einer größten Seitenfläche auf dem Drehteller abgelegt werden können, ist es bei einer bevorzugten Ausführungsform vorgesehen, dass sofern bei der Ermittlung der räumlichen Ausrichtung erkannt wird, dass bei dem von der ersten Fördereinrichtung gehaltenen Stückgut nicht eine größte Seitenfläche der Auflagefläche zugewandt ist, das Stückgut nach dem Anordnen auf der Auflagefläche mittels einer Fördereinrichtung derart bewegt wird, dass das Stückgut auf einer größten Seitenfläche auf der Auflagefläche liegt.

Im Nachfolgenden werden bevorzugte Ausführungsformen der erfindungsgemäßen Vorrichtung sowie des erfindungsgemäßen Verfahrens unter Bezugnahme auf die beigefügte Zeichnung beschrieben, in welcher:
Figur 1a eine Schrägansicht und Figur 1b eine Seitenansicht einer ersten Ausführungsform der erfindungsgemäßen Vorrichtung mit schematisch angedeuteten Erfassungsbereichen von Lese- und Erfassungseinrichtungen zeigt;
Figur 2 eine Schrägansicht der in den Figuren 1a und 1b gezeigten Ausführungsform ohne die Erfassungsbereiche zeigt;
Figur 3 eine weitere Schrägansicht der ersten Ausführungsform ohne Erfassungsbereiche und Lese- sowie Erfassungseinrichtungen zeigt;
Figur 4 eine Draufsicht der ersten Ausführungsform zeigt;
Figur 5 eine zweite Ausführungsform der erfindungsgemäßen Vorrichtung zeigt;
Figuren 6a - 6c verschiedene Stadien einer ersten Ausführungsform des erfindungsgemäßen Verfahrens zeigen;
Figuren 7, 8 und 9 weitere Ausführungsformen des erfindungsgemäßen Verfahrens zeigen, bei welchen die Stückgüter jeweils unterschiedlich in dem Ablagebereich angeordnet sind;
Figur 10 eine dritte Ausführungsform der erfindungsgemäßen Vorrichtung zeigt;
Figur 11 eine vierte Ausführungsform der erfindungsgemäßen Vorrichtung zeigt;
Figur 12 eine Detailaufnahme der ersten Fördereinrichtung der vierten Ausführungsform zeigt;
Figuren 13a - 13c eine weitere Ausführungsform des erfindungsgemäßen Verfahrens zeigen; und
Figur 14 ein Ablaufschema einer Ausführungsform des erfindungsgemäßen Verfahrens zeigt.

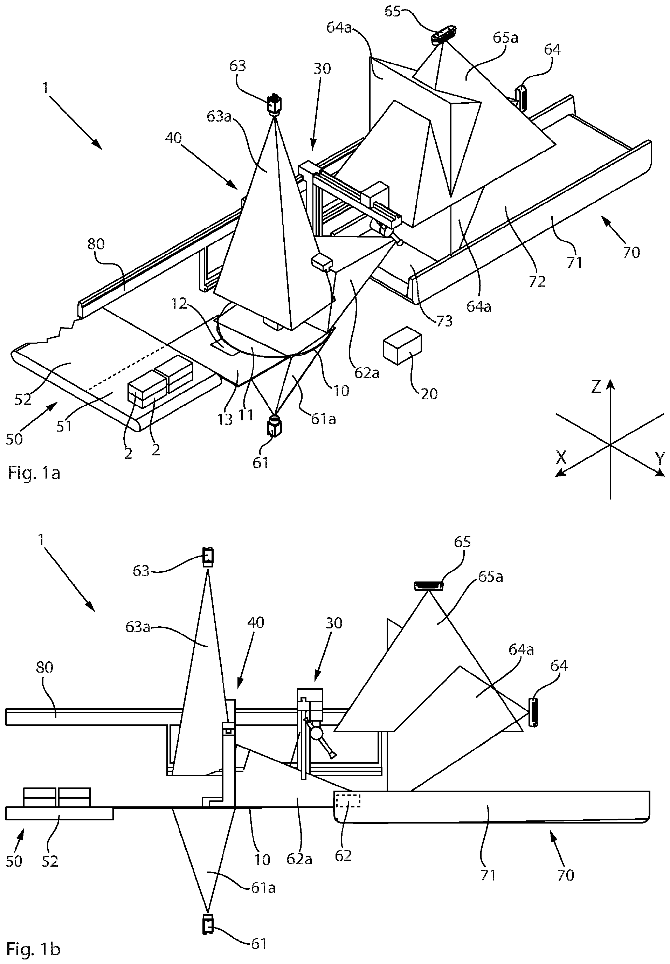

Figuren 1a und 1b zeigen eine Schrägansicht sowie eine Seitenansicht einer ersten Ausführungsform einer erfindungsgemäßen Vorrichtung 1. Die Vorrichtung 1 umfasst einen zentralen optisch transparenten Drehteller 10 mit einer Auflagefläche 11. Diese Auflagefläche erstreckt sich in X- und Y-Richtung, wobei die X-Richtung der Längsachse der Vorrichtung entspricht. Der optisch transparente Drehteller 10 wirkt mit einem Drehantrieb 12 zusammen, über welchen der Drehteller um eine sich in Z-Richtung erstreckende Drehachse drehbar ist, wobei sich die Z-Richtung orthogonal zu einer durch die X- und die Y-Richtung aufgespannte Ebene erstreckt. Bei der gezeigten Ausführungsform ist der Drehantrieb bei einer Verwerfeinrichtung 13 angeordnet, welche bei einer dem Drehteller 10 zugewandten Stirnfläche eine runde Ausnehmung aufweist, welche an den Durchmesser des Drehtellers derart angepasst ist, dass zwischen Verwerfeinrichtung 13 und Drehteller 10 lediglich ein schmaler Spalt ausgebildet ist, über welchen Stückgüter ggf. problemlos geschoben werden können. Unterhalb des Drehtellers 10 ist eine erste optische Leseeinrichtung 61 angeordnet, wobei bei den Figuren 1a und 1b der Erfassungsbereich 61a dieser Leseeinrichtung schematisch angedeutet ist. Mittels der ersten optischen Leseeinrichtung 61 wird ein auf dem Drehteller aufliegendes Stückgut abgetastet, um dessen X- und Y-Dimensionen zu ermitteln. Ferner wird versucht, einen ggf. auf der dem Drehteller zugewandten Seitenfläche des Stückgutes angebrachten Identifizierer zu lesen, um anhand dieses Identifizierers zu ermitteln, um welche Arzneimittelart und Packungsart es sich genau handelt. Die erste Leseeinrichtung 61 ist über nicht dargestellte Leitungen mit einer Steuereinrichtung 20 gekoppelt. Das Ermitteln der X- und Y-Dimensionen sowie der Versuch der Ermittlung des Identifizierers werden entweder von der Leseeinrichtung selbst oder von der Steuereinrichtung durchgeführt, und zwar mit Hilfe von bekannter Bildverarbeitungssoftware. Ob die Ermittlung der Dimensionen sowie des Identifizierers von der Leseeinrichtung selbst oder der Steuereinrichtung durchgeführt wird, hängt von der genauen Ausgestaltung der Leseeinrichtung ab. Sofern diese durch eine einfache 3D-Kamera ausgebildet ist, wird das eigentliche Ermitteln der Dimensionen sowie des Identifizierers von in der Steuereinrichtung ablaufender Bildverarbeitungssoftware durchgeführt.

Seitlich des Drehtellers 10, und bei der gezeigten Ausführungsform in einem Bereich einer Bereitstellungseinrichtung 70, ist eine zweite optische Leseeinrichtung 62 mit einem Erfassungsbereich 62a angeordnet, die zum Erfassen der Z-Dimension, also der Höhe, des Stückgutes und zum Abtasten eines Identifizierers auf einer sich orthogonal zu der der Ablagefläche des Drehtellers erstreckenden Seitenfläche des Stückgutes vorgesehen ist.

Die vorgenannte Bereitstellungseinrichtung 70 umfasst bei der gezeigten Ausführungsform ein Förderband 72 sowie Seitenwände 71. Bei der gezeigten Ausführungsform liefert die Bereitstellungseinrichtung Stückgüter in X-Richtung an, und zwar von stromauf des Drehtellers bezogen auf die X-Richtung. Die Bereitstellungseinrichtung 70 umfasst stromab des Förderbandes 72 eine Pufferzone 73, bei welcher die Bewegung angelieferter Stückgüter gestoppt wird und welche Stückgüter aufnehmen kann, die beim Greifen eines Stückgutes aus einer Mehrzahl an Stückgütern ggf. verrutschen. In der Pufferzone ist auch die zweite optische Leseeinrichtung 62 angeordnet.

Bei der gezeigten Ausführungsform ist in Z-Richtung oberhalb des Drehtellers eine dritte optische Leseeinrichtung 63 mit einem Erfassungsbereich 63a angeordnet, wobei die dritte optische Leseeinrichtung zum Erfassen eines Identifizierers auf einer dem Drehteller abgewandten Seitenfläche des Stückgutes vorgesehen ist. Sofern dies nicht bereits mit der ersten optischen Leseeinrichtung geschehen ist, kann ggf. auch über die dritte optische Leseeinrichtung die X- und Y-Dimension des aufliegenden Stückgutes ermittelt werden. Auch die dritte optische Leseeinrichtung 63 ist über wiederum nicht dargestellte Leitungen mit der Steuereinrichtung 20 verbunden und kann entsprechend der ersten Leseeinrichtung ausgebildet sein und entsprechend betrieben werden, d. h. die Ermittlung der Dimensionen bzw. des Identifizierers kann von der Leseeinrichtung selbst oder der Steuereinrichtung durchgeführt werden.

Stromab des Drehtellers ist eine Einlagerungseinrichtung 50 vorgesehen, welche bei der gezeigten Ausführungsform ein Förderband 52 umfasst, wobei ein Abschnitt dieses Förderbandes einen Ablagebereich 51 bereitstellt, auf welchen Stückgüter nach dem Identifizieren abgelegt werden können. Aufgrund der Verwendung eines Förderbandes ist der Ablagebereich also nicht stets durch denselben Abschnitt bereitgestellt, sondern wird in Abhängigkeit von der Bewegung des Förderbandes durch unterschiedliche Abschnitte des Förderbandes bereitgestellt. Die Ausrichtung der Einlagerungseinrichtung ist für die vorliegende Erfindung nicht wesentlich. Bei der gezeigten Ausführungsform ist diese in Y-Richtung ausgebildet, wobei mittels des Förderbandes abgelegte Stückgüter fortbewegt werden können, bevor diese von einem Greifer von dem Förderband genommen werden. Die Einlagerungseinrichtung kann aber auch eine bewegliche Förderplatte umfassen, mittels welcher abgelegte Stückgüter bewegt werden. Alternativ ist es auch möglich, dass die Einlagerungseinrichtung einen nicht-bewegbaren Fördertisch umfasst, der den Ablagebereich 51 bereitstellt.

Die Fördereinrichtung umfasst ferner eine sich in X-Richtung erstreckende Führung 80, an welcher eine erste Fördereinrichtung 30 und eine zweite Fördereinrichtung 40 geführt sind, die beide mit nicht dargestellten Leitungen mit der Steuereinrichtung 20 gekoppelt sind und die unter Bezugnahme auf nachfolgende Figuren genauer beschrieben sind.

Oberhalb der Bereitstellungseinrichtung 70 ist eine Lageerfassungseinrichtung 65 mit einem Erfassungsbereich 65a angeordnet, wobei die Lageerfassungseinrichtung über nicht dargestellte Leitungen mit der Steuereinrichtung 20 verbunden ist. Mittels der Lageerfassungseinrichtung 65 werden auf dem Förderband 72 aufliegende Stückgüter analysiert und es wird bestimmt, welches Stückgut als nächstes von der Mehrzahl der Stückgüter mit der ersten Fördereinrichtung 30 abgegriffen wird. Die Lageerfassungseinrichtung kann beispielsweise als 3D-Kamera ausgebildet sein, die die erfassten Bilder an die Steuereinrichtung weiterleitet, wo mittels üblicher Bildverarbeitungssoftware bestimmt wird, welches Stückgut als nächstes ergriffen wird.

Die mittels der Bereitstellungseinrichtung 70 bereitgestellten Stückgüter sind regelmäßig chaotisch und ohne Ordnung auf dem Förderband 72 angeordnet. Die Stückgüter sind also ungeordnet auf der Bereitstellungseinrichtung, d. h. die Ausrichtung der unterschiedlichen Stückgüter unterscheidet sich, so dass ein Stückgut beispielsweise auf einer größten Seitenfläche auf der Bereitstellungseinrichtung aufliegen kann, ein anderes auf einer schmalen Seitenfläche. Wie ein Stückgut mittels der ersten Fördereinrichtung gegriffen wird, ist mit der Lageerfassungseinrichtung regelmäßig nicht feststellbar, d. h. die Ausrichtung des ergriffenen Stückgutes ist nicht bekannt, da die Steuereinrichtung nur aus den Dimensionen der ihr zugewandten Seitenfläche eines Stückgutes nicht auf die anderen Dimensionen schließen kann.

Um die Ausrichtung eines Stückgutes zu ermitteln, welches mit der ersten Fördereinrichtung von der Bereitstellungseinrichtung gegriffen wurde, umfasst die Vorrichtung bei der gezeigten Ausführungsform eine Groberfassungseinrichtung 64 mit einem Erfassungsbereich 64a, die ebenfalls oberhalb der Bereitstellungseinrichtung und seitlich zu der ersten Fördereinrichtung angeordnet ist. Mit der Groberfassungseinrichtung kann die Z- und die Y-Dimension des aufgenommenen Stückgutes ermittelt werden. Anhand der bereits durch die Lageerfassungseinrichtung bekannten X-Dimension kann die Ausrichtung des ergriffenen Stückgutes ermittelt werden, so dass diese in Vorbereitung der Anordnung auf dem Drehteller oder nach dem Ablegen ggf. noch variiert werden kann. Wenn beispielsweise festgestellt wird, dass die größten Seitenflächen des gegriffenen Stückgutes sich in Z-Richtung erstrecken, kann das Stückgut nach dem Anordnen auf dem Drehteller mit der ersten oder der zweiten Fördereinrichtung umgestoßen werden, so dass das Stückgut mit einer größten Seitenfläche auf dem Drehteller aufliegt.

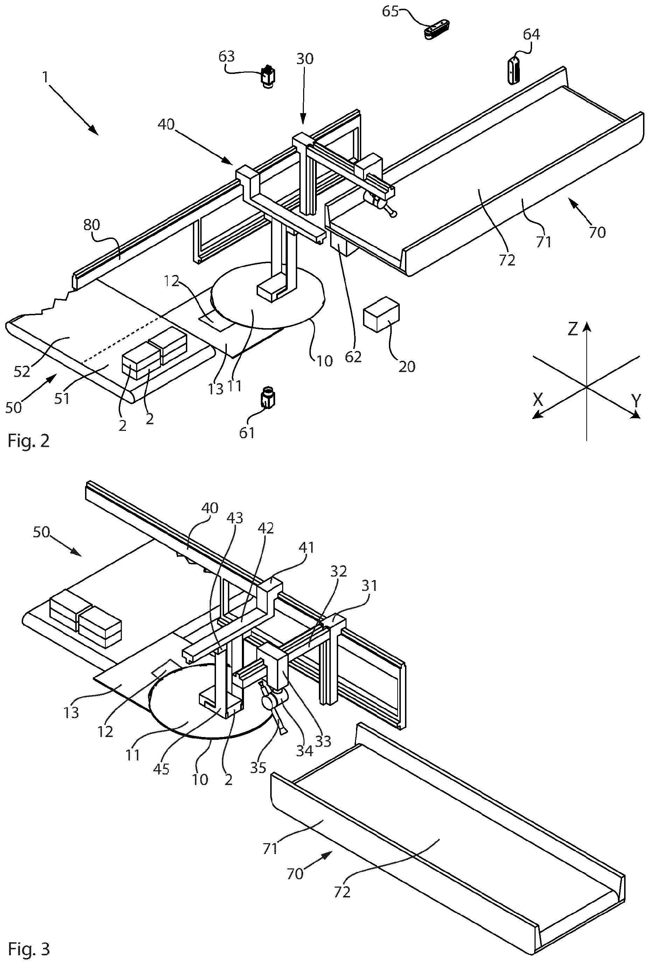

Figuren 2 und 3 zeigen weitere Schrägansichten der ersten Ausführungsform, wobei bei Figur 2 die Erfassungsbereiche der optischen Leseeinrichtungen fortgelassen sind, so dass die verbleibenden Komponenten der Vorrichtung besser zu erkennen sind. Bei Figur 3 sind ebenfalls die optischen Leseeinrichtungen, die Groberfassungseinrichtung und die Lageerfassungseinrichtung fortgelassen, so dass die erste und die zweite Fördereinrichtung 30, 40 genau zu erkennen sind, die nachfolgend detaillierter beschrieben werden.

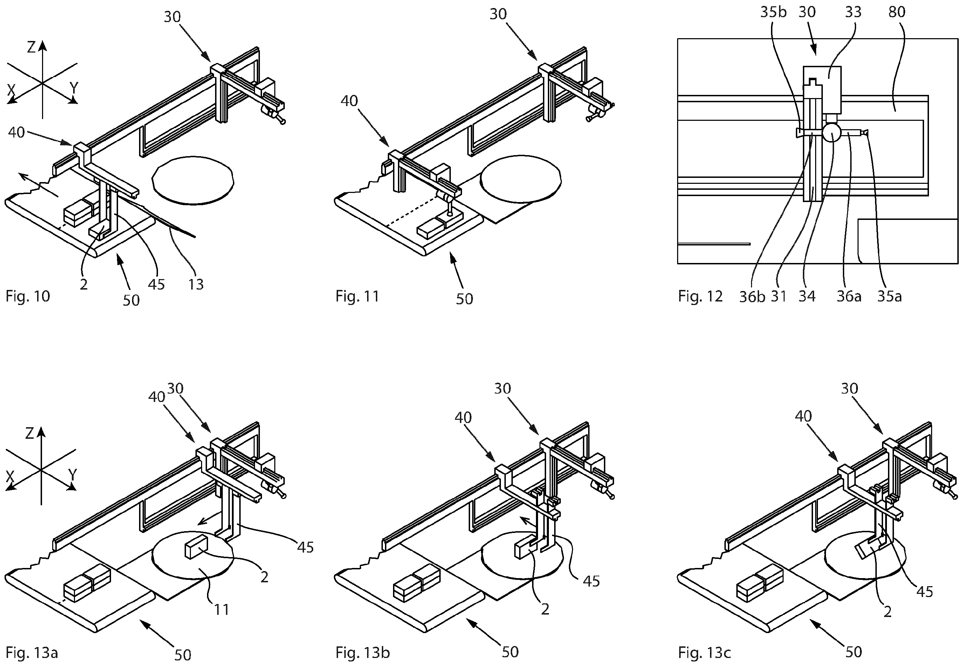

Die erste Fördereinrichtung 30 umfasst einen X-Schlitten 31, der in X-Richtung an der Führung 80 verfahrbar ist. Der X-Schlitten umfasst eine Z-Führung, an welcher eine Y-Führung 32 in Z-Richtung verfahrbar ist. An der Y-Führung wiederum ist eine in Y-Richtung verfahrbare Halterung 33 angeordnet, die bei ihrer unteren, dem Drehteller 10 zugewandten Stirnseite ein Drehlager 34 aufweist, an welchem ein Greifmittel 35 angeordnet ist, was bei der gezeigten Ausführungsform als Sauggreifer mit doppeltem Saugkopf ausgeführt ist, welcher unter Bezugnahme auf Figur 12 detaillierter beschrieben ist.

Die zweite Fördereinrichtung 40 umfasst ebenfalls einen X-Schlitten 41, der in X-Richtung an der Führung 80 verfahrbar ist. Ferner umfasst die zweite Fördereinrichtung eine Y-Führung 42, die bei der gezeigten Ausführungsform einstückig mit dem X-Schlitten ausgebildet ist, also nicht, wie dies bei der ersten Fördereinrichtung der Fall ist, an dem X-Schlitten in Z-Richtung verfahrbar ist. An der Y-Führung 42 der zweiten Fördereinrichtung sind zwei Halterungen 43 angeordnet, die in Y-Richtung verfahrbar sind, und zwar voneinander weg und aufeinander zu. An jeder Halterung 43, ist ein Greifmittel 45 angeordnet, wobei die Greifmittel 45 bei der zweiten Fördereinrichtung als Klemmbacken ausgebildet sind. Bei der in den Figuren 2 und 3 gezeigten Ausführungsform ist ein Stückgut 2 zwischen den Klemmbacken 45 gehalten und kann mit der zweiten Fördereinrichtung 40 über die Verwerfeinrichtung 13 auf den stromab des Drehtellers angeordneten Ablagebereich 51 bewegt werden. Stromauf des Drehtellers ist die Bereitstellungseinrichtung 70 zum Bereitstellen einer Mehrzahl von (nicht dargestellten) Stückgütern angeordnet.

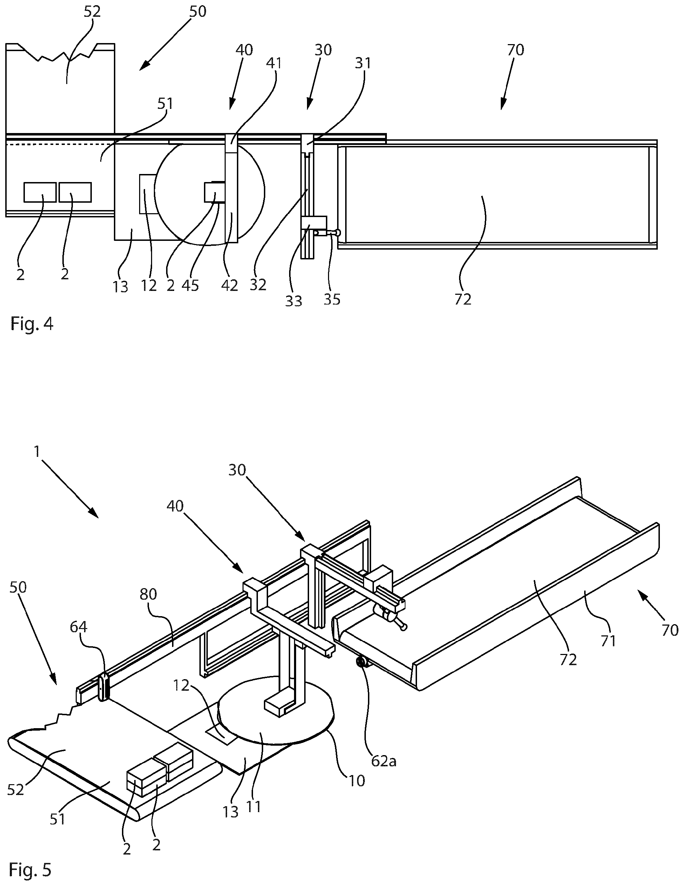

Figur 4 zeigt eine Draufsicht der ersten Ausführungsform der erfindungsgemäßen Vorrichtung, wobei die Leseeinrichtungen sowie die Erfassungseinrichtungen fortgelassen sind. Bei der Draufsicht ist insbesondere zu erkennen, dass die Bereitstellungseinrichtung 70 stromauf des optisch transparenten Drehtellers 10 und die Einlagerungseinrichtung 50 stromab dieses Drehtellers angeordnet ist. Über die Bereitstellungseinrichtung 70 werden (nicht dargestellte) Stückgüter, insbesondere Arzneimittelpackungen, bereitgestellt, die dann von der ersten Fördereinrichtung 30 auf den Drehteller 10 verbracht werden, von wo sie mittels der zweiten Fördereinrichtung 40 in den Ablagebereich 51 der Einlagerungseinrichtung 50 bewegt werden.

Figur 5 zeigt eine Schrägansicht einer zweiten Ausführungsform der erfindungsgemäßen Vorrichtung. Bei dieser Ausführungsform ist die zweite Erfassungseinrichtung 62 geringfügig anders angeordnet, nämlich unterhalb der Bereitstellungseinrichtung 70, welche bei dieser Ausführungsform auch keine Pufferzone umfasst. Auch die Groberfassungseinrichtung 64 ist abweichend zu der ersten Ausführungsform angeordnet, nämlich an der Führung 80 der Vorrichtung, und zwar in der Nähe des Drehtellers 10.

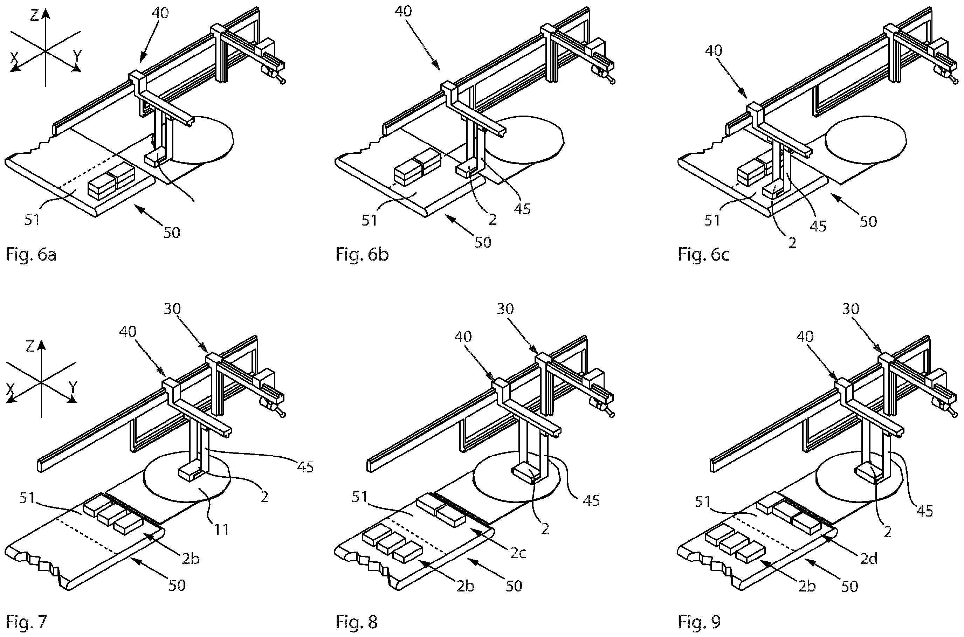

Die Figuren 6a - 6c zeigen unterschiedliche Positionen der zweiten Fördereinrichtung bei einer ersten Ausführungsform des erfindungsgemäßen Verfahrens und sollen veranschaulichen, wie ein Stückgut in den Ablagebereich 51 bewegt werden kann. Bei Figur 6a sind in dem Ablagebereich 51 vier Stückgüter angeordnet, wobei bei der gezeigten Ausführungsform jeweils zwei gleich dimensionierte Stückgüter übereinander angeordnet sind und die beiden Stückgutstapel in X-Richtung hintereinander angeordnet sind. Bei der gezeigten Ausführungsform umfasst die Einlagerungseinrichtung 50 ein Förderband 52, mittels welchem in dem Ablagebereich 51 angeordnete Stückgüter in Y-Richtung bewegbar sind. Bei Figur 6b sind die beiden Stückgutstapel bereits nach "links" fortbewegt, so dass der Ablagebereich 51 frei für die Aufnahme weiterer Stückgüter ist. Mit der zweiten Fördereinrichtung ist ein weiteres Stückgut 2, gehalten von den Klemmbacken 45, bereits in X-Richtung geringfügig hin zu dem Ablagebereich 51 bewegt. Aufgrund der Verfahrbarkeit der zweiten Fördereinrichtung in X-Richtung ist es möglich, mit dieser eine Mehrzahl von Stückgütern u. a. in X-Richtung hintereinander in dem Ablagebereich 51 anzuordnen. In Figur 6c ist die endgültige Position des von den Klemmbacken 45 noch gehaltenen Stückgutes 2 in dem Ablagebereich 51 dargestellt. Damit eine Stapelung von Stückgütern möglich ist, sind die Klemmbacken auch in Z-Richtung bewegbar, was bei den Figuren 6a - 6c aber nicht veranschaulicht ist.

Die Figuren 7 - 9 zeigen eine weitere Ausführungsform der erfindungsgemäßen Vorrichtung sowie unterschiedliche Verfahrensführungen im Hinblick auf das Anordnen von Stückgütern in dem Ablagebereich 51. Bei sämtlichen der Figuren 7 - 9 ist die Einlagerungseinrichtung 50 abweichend zu der Einlagerungseinrichtung der vorhergehenden Ausführungsformen ausgebildet, und zwar erstreckt sich die Einlagerungseinrichtung nicht in Y-Richtung, sondern in X-Richtung. Bei der gezeigten Ausführungsform umfasst die Einlagerungseinrichtung wieder ein Förderband 52, welches den Ablagebereich 51 zum Anordnen von Stückgütern bereitstellt. Bei Figur 7 sind drei Stückgüter in Y-Richtung nebeneinander in einer Stückgutreihe 2b angeordnet, wobei die Längsachse der Stückgüter an der Längsachse der Einlagerungseinrichtung 50 ausgerichtet ist. Bei der in Figur 8 dargestellten Verfahrensführung sind die Stückgüter um 90° gedreht angeordnet, d. h. die Längsachse der Stückgüter der Stückgutreihe 2c ist an der Y-Richtung ausgerichtet. Unabhängig von der Ausrichtung der Stückgüter in dem Ablagebereich 51 können die beiden Stückgutreihen 2b und 2c mittels beispielsweise eines dem Fachmann bekannten (nicht dargestellten) Klemmgreifers von dem Förderband genommen werden, wozu der Klemmgreifer in Y-Richtung über das Förderband bewegt wird. Die Stückgutreihen können direkt im Ablagebereich entnommen werden, es ist aber auch möglich, die Stückgutreihe vor dem Entnehmen mittels Klemmgreifer erst aus dem Ablagebereich zu bewegen, wie dies in den Figuren 7 - 9 vorgesehen ist. Figur 9 zeigt eine alternative Anordnung von Stückgütern in einer Stückgutreihe 2d, wobei bei der in Figur 9 gezeigten Ausführung die Stückgüter unterschiedlich angeordnet sind, wobei ein Stückgut (das "hintere") mit der Längsachse an der X-Richtung ausgerichtet ist und zwei an der Y-Richtung. Da der (nicht dargestellten) Steuereinrichtung die Entnahmerichtung der Stückgüter von der Einlagerungseinrichtung bekannt ist, ist es für die Steuereinrichtung möglich, die Stückgüter so auf der Ablagefläche anzuordnen, dass eine Entnahme einer Stückgutreihe 2d auch bei unterschiedlich angeordneten bzw. breiten Stückgütern möglich ist. Bei Verwendung eines Klemmgreifers beispielsweise ist es in einem solchen Fall notwendig, dass das breiteste, mit den Klemmbacken gegriffene Stückgut bezogen auf die Auslagerungsrichtung in Y-Richtung "hinten" liegt, also von den Spitzen der Klemmbacken derart gegriffen werden kann, dass die davor liegenden Stückgüter beim Entnehmen von beispielsweise dem Förderband bewegt werden.

Figur 10 zeigt eine Darstellung der ersten Ausführungsform der erfindungsgemäßen Vorrichtung, wobei bei der in Figur 10 gezeigten Darstellung die Verwerfeinrichtung 13 bei ihrer dem Drehteller 10 zugewandten Stirnfläche nach unten weggeschwenkt ist, so dass Stückgüter, beispielsweise bei einer Nichterkennung eines Identifizierers, über die Öffnung verworfen werden können.

Figur 11 zeigt eine dritte Ausführungsform der erfindungsgemäßen Vorrichtung, wobei bei der gezeigten Ausführungsform sowohl die erste Fördereinrichtung 30 als auch die zweite Fördereinrichtung 40 als Sauggreifer ausgebildet sind.

Figur 12 zeigt eine Detailansicht der als Sauggreifer ausgebildeten ersten Fördereinrichtung 30. Wie es bei Figur 12 zu erkennen ist, umfasst der Sauggreifer bei dem Drehlager 34 zwei gegenüberliegende Saugröhren 36a, 36b, an deren Enden jeweils ein Saugkopf 35a, 35b, angeordnet ist. Die Durchmesser der Saugköpfe 35a, 35b sind unterschiedlich dimensioniert, so dass diese an unterschiedliche Dimensionen von zu ergreifenden Stückgütern angepasst werden können. Soll beispielsweise ein Stückgut an einer sehr schmalen Seitenfläche gegriffen werden, wird der Saugkopf 35a verwendet, soll eine breitere bzw. größere Seitenfläche gegriffen werden, wird der Saugkopf 35b verwendet.

Figuren 13a - 13c zeigen einen Abschnitt eines Verfahrens gemäß einer weiteren Ausführungsform. Bei dieser Ausführungsform wird nach dem Ergreifen eines Stückgutes mit der ersten Fördereinrichtung 30 mittels einer (in den Figuren 13a - 13c nicht dargestellten) Groberfassungseinrichtung die Ausrichtung des Stückgutes ermittelt. Wie man Figur 13a entnehmen kann, wurde das Stückgut derart aufgenommen und auf dem Drehteller 10 abgesetzt, dass sich die beiden größten Seitenflächen senkrecht zur Auflagefläche 11 des Drehtellers erstrecken. Da es regelmäßig bevorzugt ist, die Stückgüter auf einer größten Seitenfläche zu lagern, wird das Stückgut bei der gezeigten Ausführungsform mit Hilfe der zweiten Fördereinrichtung umgeworfen (siehe Figur 13b), so dass es vor dem Einlagern auf einer größten Seitenfläche auf dem Drehteller aufliegt. Ob die Abtastung der Seitenflächen zum Erkennen des Identifizierers und der Dimensionen vor oder nach dem Umstoßen vorgenommen wird, ist für das Verfahren selbst unwesentlich.

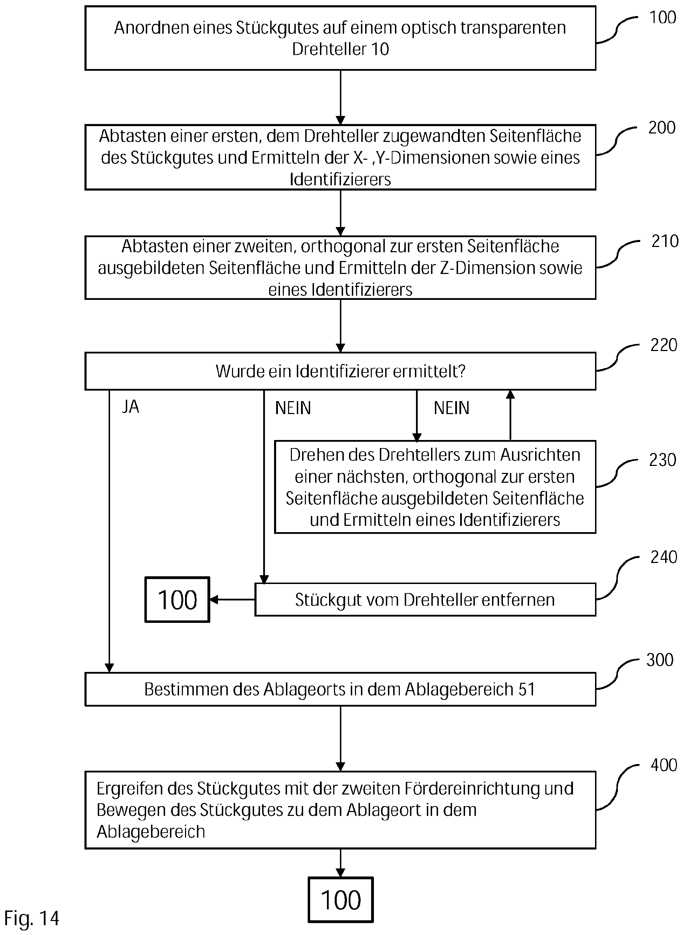

Figur 14 zeigt ein Ablaufdiagramm einer bevorzugten Ausführungsform des erfindungsgemäßen Verfahrens, wobei diese Ausführungsform sehr einfach gehalten ist. In einem ersten Schritt 100 wird ein Stückgut auf dem optisch transparenten Drehteller 10 angeordnet. Dazu wird ein Stückgut mit der ersten Fördereinrichtung 30 ergriffen und auf einer ersten Seitenfläche auf der sich in X- und Y-Richtung erstreckenden Auflagefläche 11 angeordnet. In einem Schritt 200 wird die erste, dem Drehteller zugewandte Seitenfläche des Stückgutes zum Ermitteln der X-, Y-Dimensionen sowie eines Identifizierers mit einer ersten optischen Erfassungseinrichtung abgetastet. Auf der Basis der erhaltenen Daten, bei denen es sich regelmäßig um die Daten einer 3D-Kamera handelt, werden die X- und Y-Dimensionen und ggf. der Identifizierer (sofern auf dieser Seitenfläche einer aufgebracht und erkannt wurde) ermittelt. Dies kann mit der ersten optischen Leseeinrichtung selbst oder mit einer Steuereinrichtung geschehen. In einem Schritt 210 wird eine zweite, orthogonal zur ersten Seitenfläche ausgebildete Seitenfläche zum Ermitteln der Z-Dimension sowie eines Identifizierers mit der zweiten optischen Leseeinrichtung abgetastet. Auf Basis der erhaltenen Daten wird, wie bereits oben beschrieben, die Z-Dimension des Stückgutes ermittelt. Sofern auf der ersten Seitenfläche kein Identifizierer erkannt werden konnte, wird auch versucht, einen Identifizierer auf Basis der erhaltenen Daten zu ermitteln.

In einem nachfolgenden Schritt 220 wird dann ermittelt, ob bei Schritt 200 oder 210 ein Identifizierer ermittelt wurde. Ist dies nicht der Fall, wird in einem Schritt 230 der Drehteller so gedreht, dass der zweiten optischen Leseeinrichtung 62 eine nächste orthogonale Seitenwand zugewandt ist. Es wird die nächste Seitenfläche abgetastet und im Hinblick auf einen Identifizierer analysiert. Anschließend wird das Verfahren ab Schritt 220 so oft wiederholt, bis entweder ein Identifizierer ermittelt wurde oder alle vier orthogonalen Seitenflächen abgetastet wurden. Wurde kein Identifizierer ermittelt, wird das Stückgut in einem Schritt 240 von dem Drehteller entfernt und zu Schritt 100 zurückgekehrt. Wurde ein Identifizierer ermittelt, wird von der Steuereinrichtung in einem Schritt 300 ein Ablageort in dem Ablagebereich 51 ermittelt. Dies ist möglich, da die Steuereinrichtung die Belegung des Ablagebereichs sowie die Art und die Dimensionen des Stückgutes kennt.

Nach dem Bestimmen des Ablagebereichs wird in einem Schritt 400 das Stückgut mit der zweiten Fördereinrichtung auf dem Drehteller aufliegend ergriffen und zu dem Ablageort in dem Ablagebereich bewegt. Dazu wird die zweite Fördereinrichtung in X- und Y-Richtung in den Ablagebereich bewegt. Nach Ablage des Stückgutes wird das Verfahren bei Schritt 100 fortgesetzt bis der Ablagebereich gefüllt ist. Die Stückgüter werden dann aus dem Ablagebereich entfernt, beispielsweise durch einen Klemmgreifer eines (nicht zur Vorrichtung gehörenden) Bediengeräts einer Kommissioniervorrichtung oder indem die Ablagefläche, die den Ablagebereich bereitstellt, derart bewegt wird, dass die Stückgüter aus dem Ablagebereich entfernt werden.

## Patentansprüche

1. Vorrichtung (1) zum Identifizieren, Vermessen und Positionieren von Stückgütern (2), aufweisend
einen optisch transparenten Drehteller (10) mit einer sich in einer X- und Y-Richtung der Vorrichtung erstreckenden Auflagefläche (11) für Stückgüter, wobei der Drehteller (10) mit einem mit einer Steuereinrichtung (20) gekoppelten Drehantrieb (12) zusammenwirkt und um eine sich in Z-Richtung erstreckende Drehachse drehbar ist, wobei sich die Z-Richtung orthogonal zu der X- und Y-Richtung erstreckt und wobei die X-Richtung der Längs- und die Y-Richtung der Querachse der Vorrichtung entspricht,
eine erste Fördereinrichtung (30) zum Anordnen eines Stückgutes auf der Auflagefläche (11) des Drehtellers (10),
eine in Z-Richtung unterhalb des Drehtellers (10) angeordnete und mit der Steuereinrichtung (20) gekoppelte erste optische Leseeinrichtung (61) zum Erfassen der Dimensionen eines auf der Auflagefläche (11) aufliegenden Stückgutes sowie eines Identifizierers auf einer der Auflagefläche (11) zugewandten Seitenfläche eines aufliegenden Stückgutes,
eine mit der Steuereinrichtung (20) gekoppelte zweite optische Leseeinrichtung (62) zum Erfassen der Höhe eines auf der Auflagefläche (11) aufliegenden Stückgutes sowie eines Identifizierers auf einer zur Auflagefläche orthogonalen Seitenfläche eines aufliegenden Stückgutes,
einen stromab des Drehtellers (10) angeordneten Ablagebereich (51) für eine Mehrzahl von Stückgütern, wobei die Anordnung des Drehtellers sowie des Ablagebereichs die Längsachse definiert,
eine mit der Steuereinrichtung (20) gekoppelte zweite Fördereinrichtung (40) mit einem Greifmittel (45) für Stückgüter, wobei das Greifmittel (45) zumindest in X- und Y-Richtung derart über den Ablagebereich (51) bewegbar ist, dass Stückgüter in X- und/oder Y-Richtung nebeneinander in dem Ablagebereich angeordnet werden können,
**dadurch gekennzeichnet, dass** die erste Fördereinrichtung (30) ein in X-, Y- und Z-Richtung bewegbares Greifmittel (35) umfasst.

2. Vorrichtung (1) zum Identifizieren, Vermessen und Positionieren von Stückgütern (2) nach Anspruch 1, **dadurch gekennzeichnet, dass** die Vorrichtung eine in Z-Richtung oberhalb des Drehtellers angeordnete und mit der Steuereinrichtung (20) gekoppelte dritte optische Leseeinrichtung (63) zum Erfassen der Dimensionen des auf der Auflagefläche (11) aufliegenden Stückgutes und/oder eines Identifizierers auf einer der Auflagefläche (11) abgewandten Seitenfläche aufweist.

3. Vorrichtung (1) zum Identifizieren, Vermessen und Positionieren von Stückgütern (2) nach Anspruch 1 oder 2, **dadurch gekennzeichnet, dass** die Vorrichtung eine mit der Steuereinrichtung gekoppelte optische Groberfassungseinrichtung (64) zum Ermitteln der räumlichen Ausrichtung eines Stückgutes umfasst.

4. Vorrichtung (1) zum Identifizieren, Vermessen und Positionieren von Stückgütern (2) nach einem der Ansprüche 1 - 3, **dadurch gekennzeichnet, dass** zwischen dem Drehteller (10) und der Ablagefläche (51) eine Verwerfeinrichtung (13) zum Abführen von Stückgütern angeordnet ist.

5. Vorrichtung (1) zum Identifizieren, Vermessen und Positionieren von Stückgütern (2) nach einem der Ansprüche 1 - 4, **dadurch gekennzeichnet, dass** die erste und/oder die zweite Fördereinrichtung (30, 40) als in X-, Y- und Z-Richtung bewegbare/-r Sauggreifer ausgebildet sind/ist.

6. Vorrichtung (1) zum Identifizieren, Vermessen und Positionieren von Stückgütern (2) nach Anspruch 5, **dadurch gekennzeichnet, dass** ein Sauggreifer zwei unterschiedlich dimensionierte Saugköpfe (35a, 35b) aufweist.

7. Vorrichtung (1) zum Identifizieren, Vermessen und Positionieren von Stückgütern (2) nach einem der Ansprüche 1 - 6, **dadurch gekennzeichnet, dass** die zweite Fördereinrichtung (40) als zumindest in X- und Y-Richtung bewegbarer Klemmgreifer ausgebildet ist.

8. Vorrichtung (1) zum Identifizieren, Vermessen und Positionieren von Stückgütern (2) nach einem der Ansprüche 1 - 7, **dadurch gekennzeichnet, dass** die Vorrichtung (1) eine Bereitstellungseinrichtung (70) sowie eine in Z-Richtung oberhalb der Bereitstellungseinrichtung angeordnete Lageerfassungseinrichtung (65) aufweist.

9. Verfahren zum Identifizieren, Vermessen und Positionieren von Stückgütern (2), wobei
a) ein einzelnes Stückgut mit einer ersten Fördereinrichtung (30) auf einer ersten Seitenfläche auf einer sich in X- und Y-Richtung erstreckenden Auflagefläche (11) eines optisch transparenten Drehtellers (10) angeordnet wird, wobei die erste Fördereinrichtung (30) ein in X-, Y- und Z-Richtung bewegbares Greifmittel (35) umfasst, wobei der Drehteller (10) mit einem mit einer Steuereinrichtung (20) gekoppelten Drehantrieb (12) zusammenwirkt und um eine sich in Z-Richtung erstreckende Drehachse drehbar ist, wobei sich die Z-Richtung orthogonal zu der X- und Y-Richtung erstreckt und wobei die X-Richtung der Längs- und die Y-Richtung der Querachse der Vorrichtung entspricht,
b) mit einer in Z-Richtung unterhalb des Drehtellers (10) angeordneten ersten optischen Leseeinrichtung (61) die erste Seitenfläche abgetastet und die X-, Y-Dimensionen des auf der Auflagefläche (11) aufliegenden Stückgutes ermittelt werden und bestimmt wird, ob bei der Abtastung der ersten Seitenfläche ein Identifizierer ermittelt wurde,
c) mit einer zweiten optischen Leseeinrichtung (62) eine orthogonal zur ersten Seitenfläche ausgebildete, eine der zweiten optischen Leseeinrichtung zugewandte zweite Seitenfläche abgetastet und die Z-Dimension des auf der Auflagefläche aufliegenden Stückgutes ermittelt wird und, sofern bei der ersten Seitenfläche kein Identifizierer ermittelt wurde, bestimmt wird, ob bei der Abtastung der zweiten Seitenfläche ein Identifizierer ermittelt wurde, wobei die Schritte b) und c) gleichzeitig oder zeitlich versetzt durchgeführt werden können,
d) für den Fall, dass kein Identifizierer ermittelt wurde, der Drehteller so gedreht wird, dass eine nächste, zur ersten Seitenfläche senkrechte Seitenfläche der zweiten optischen Leseeinrichtung zugewandt ist und mit der zweiten Leseeinrichtung die nächste Seitenfläche abgetastet wird und bestimmt wird, ob bei der Abtastung der nächsten Seitenfläche ein Identifizierer ermittelt wurde,
e) der Schritt d) so lange wiederholt wird, bis drei nächste Seitenflächen abgetastet wurden oder ein Identifizierer ermittelt wurde,
f) sofern kein Identifizierer ermittelt wurde, das Stückgut von dem Drehteller entfernt und einer weiteren Verwendung zugeführt wird,
g) sobald ein Identifizierer und sämtliche Dimensionen des aufliegenden Stückgutes ermittelt sind, von einer Steuereinrichtung anhand der Dimensionen und/oder des Identifizierers ein Ablageort in einem Ablagebereich (51), der stromab des Drehtellers angeordnet ist, bestimmt wird,
h) das Stückgut nach Bestimmen des Ablageorts mit einem Greifmittel (45) einer zweiten Fördereinrichtung (40) ergriffen und zu dem Ablageort bewegt wird, wozu das Greifmittel (45) in X- und/oder Y- und Z-Richtung bewegt wird.

10. Verfahren zum Identifizieren, Vermessen und Positionieren von Stückgütern (2) nach Anspruch 9, **dadurch gekennzeichnet, dass** in Verfahrensschritt b) mit einer in Z-Richtung oberhalb des Drehtellers (10) angeordneten dritten optischen Leseeinrichtung (63) eine dieser Leseeinrichtung (63) zugewandte Seitenfläche abgetastet und ggf. die X-, Y-Dimensionen des auf der Auflagefläche (11) aufliegenden Stückgutes ermittelt werden und bestimmt wird, ob bei der Abtastung der Seitenfläche ein Identifizierer ermittelt wurde.

11. Verfahren zum Identifizieren, Vermessen und Positionieren von Stückgütern (2) nach Anspruch 9 oder 10, **dadurch gekennzeichnet, dass** in Verfahrensschritt a) vor dem Anordnen des Stückgutes auf der Auflagefläche (11) des Drehtellers (10) mittels einer Groberfassungseinrichtung (64) die räumliche Ausrichtung des von der ersten Fördereinrichtung (30) gehaltenen Stückgutes ermittelt wird.

12. Verfahren zum Identifizieren, Vermessen und Positionieren von Stückgütern (2) nach Anspruch 11, **dadurch gekennzeichnet, dass** die Groberfassungseinrichtung (64) als optische Leseeinrichtung ausgebildet ist und bei Ermittlung der räumlichen Ausrichtung das Stückgut zum Erkennen eines Identifizierers abgetastet wird.

13. Verfahren zum Identifizieren, Vermessen und Positionieren von Stückgütern (2) nach Anspruch 11 oder 12, **dadurch gekennzeichnet, dass**, sofern bei der Ermittlung der räumlichen Ausrichtung erkannt wird, dass bei dem von der ersten Fördereinrichtung (30) gehaltenem Stückgut nicht eine größte Seitenfläche der Auflagefläche zugewandt ist, das Stückgut nach dem Anordnen auf der Auflagefläche mittels einer Fördereinrichtung (30,40) derart bewegt wird, dass das Stückgut auf einer größten Seitenfläche auf der Auflagefläche liegt.

## Claims

1. An apparatus (1) for identifying, measuring and positioning piece goods (2), comprising
an optically transparent turntable (10) having a support surface (11) for piece goods extending in an X and Y direction of the apparatus, wherein the turntable (10) cooperates with a rotary drive (12) coupled to a control device (20) and is rotatable about an axis of rotation extending in the Z direction, wherein the Z direction extends orthogonally to the X and Y directions, and wherein the X direction corresponds to the longitudinal axis and the Y direction corresponds to the transverse axis of the apparatus,
a first conveying device (30) for arranging a piece good on the support surface (11) of the turntable (10),
a first optical reading device (61) arranged in the Z direction below the turntable (10) and coupled to the control device (20) for detecting the dimensions of a piece good resting on the support surface (11) and an identifier on one side surface of a resting piece good, which side surface faces the support surface (11),
a second optical reading device (62) coupled to the control device (20) for detecting the height of a piece good resting on the support surface (11) and an identifier on a side surface of a resting piece good which side surface is orthogonal to the support surface,
a storage area (51) arranged downstream of the turntable (10) for a plurality of piece goods, wherein the arrangement of the turntable and of the storage area defines the longitudinal axis,
a second conveying device (40) coupled to the control device (20) having a gripping means (45) for piece goods, wherein the gripping means (45) is movable, at least in the X and Y directions, over the storage area (51), so that piece goods can be arranged side by side in the storage area in the X and/or Y directions,
**characterized in that** the first conveying device (30) comprises a gripping means (35) which is movable in the X, Y and Z directions.

2. The apparatus (1) for identifying, measuring and positioning piece goods (2) according to claim 1, **characterized in that** the apparatus comprises a third optical reading device (63) arranged in the Z direction above the turntable and coupled to the control device (20) for detecting the dimensions of the piece good resting on the support surface (11) and/or an identifier on one side surface facing away from the support surface (11).

3. The apparatus (1) for identifying, measuring and positioning piece goods (2) according to claim 1 or 2, **characterized in that** the apparatus comprises an optical coarse detection device (64) coupled to the control device for determining the spatial orientation of a piece good.

4. The apparatus (1) for identifying, measuring and positioning piece goods (2) according to any of claims 1-3, **characterized in that** a discarding device (13) is arranged between the turntable (10) and the storage surface (51) for the removal of piece goods.

5. The apparatus (1) for identifying, measuring and positioning piece goods (2) according to any of claims 1-4, **characterized in that** the first and/or the second conveying device (30, 40) are designed as suction grippers which are movable in the X, Y and Z directions.

6. The apparatus (1) for identifying, measuring and positioning piece goods (2) according to claim 5, **characterized in that** a suction gripper has two differently dimensioned suction heads (35a, 35b).

7. The apparatus (1) for identifying, measuring and positioning piece goods (2) according to any of claims 1-6, **characterized in that** the second conveying device (40) is designed as a clamping gripper which is movable at least in the X and Y directions.

8. The apparatus (1) for identifying, measuring and positioning piece goods (2) according to any of claims 1-7, **characterized in that** the apparatus (1) has a supply device (70) and a position detection device (65) arranged above the supply device in the Z direction.

9. A method for identifying, measuring and positioning piece goods (2), wherein
a) a single piece good is arranged by a first conveying device (30) on a first side surface on a support surface (11) of an optically transparent turntable (10) which support surface extends in the X and Y direction, wherein the first conveying device (30) comprises a gripping means (35) which is movable in the X, Y and Z directions, wherein the turntable (10) cooperates with a rotary drive (12) which is coupled to a control device (20), and which turntable is rotatable about an axis of rotation extending in the Z direction, wherein the Z direction extends orthogonally to the X and Y directions and wherein the X direction corresponds to the longitudinal axis and the Y direction corresponds to the transverse axis of the apparatus,
b) the first side surface is scanned and the X, Y dimensions of the piece good resting on the support surface (11) are detected with a first optical reading device (61) which is arranged below the turntable (10) in the Z direction, and it is determined whether an identifier was detected during the scanning of the first side surface,
c) a second side surface facing the second reading device, which second side surface is designed orthogonally to the first side surface, is scanned and the Z dimension of the piece good resting on the support surface is detected with a second optical reading device (62), and if no identifier was detected on the first side surface, it is determined whether an identifier was detected during the scanning of the second side surface, wherein steps b) and c) can be carried out simultaneously or staggered,
d) in the event that no identifier was detected, the turntable is rotated so that a next side surface, which is perpendicular to the first side surface, faces the second optical reading device, wherein the next side surface is scanned with the second reading device, and it is determined whether an identifier was detected during the scanning of the next side surface,
e) step d) is repeated until three next side surfaces were scanned, or an identifier was detected,
f) if no identifier was detected, the piece good is removed from the turntable and sent for further use,
g) as soon as an identifier and all dimensions of the resting piece good are detected, a storage location is determined in a storage area (51), which is arranged downstream of the turntable, by a control device on the basis of the dimensions and/or of the identifier,
h) the piece good is gripped with a gripping means (45) of a second conveying device (40) after determining the storage location and moved to the storage location, whereby the gripping means (45) is moved in the X and/or Y and Z directions.

10. The method for identifying, measuring and positioning piece goods (2) according to claim 9, **characterized in that** in step b) a side surface is scanned by a third optical reading device (63), which is arranged above the turntable (10) in the Z direction, said side surface facing this reading device (63), and if necessary, the X, Y dimensions of the piece good resting on the support surface (11) are detected and it is determined whether an identifier was detected during the scanning of the side surface.

11. The method for identifying, measuring and positioning piece goods (2) according to claim 9 or 10, **characterized in that** in method step a) the spatial orientation of the piece good held by the first conveying device (30) is determined before arranging the piece good on the support surface (11) of the turntable (10) by means of a coarse detection device (64).

12. The method for identifying, measuring and positioning piece goods (2) according to claim 11, **characterized in that** the coarse detection device (64) is designed as an optical reading device and, when determining the spatial orientation, the piece good is scanned in order to detect an identifier.

13. The method for identifying, measuring and positioning piece goods (2) according to claims 11 or 12, **characterized in that** the piece good is moved by means of a conveying device (30, 40) such that the piece good rests on a largest side surface on the support surface if it is detected during the determination of the spatial orientation that not a largest side surface of the piece good held by the first conveying device (30) is facing the support surface.

## Revendications

1. Dispositif (1) d'identification, de mesure et de positionnement d'articles (2), présentant
un plateau tournant (10) optiquement transparent avec une surface d'appui (11) pour des articles s'étendant dans une direction X et Y du dispositif, le plateau tournant (10) coopérant avec un entraînement rotatif (12) couplé à un dispositif de commande (20) et pouvant tourner autour d'un axe de rotation s'étendant dans la direction Z, la direction Z s'étendant orthogonalement à la direction X et Y, et la direction X correspondant à l'axe longitudinal et la direction Y à l'axe transversal du dispositif,
un premier dispositif de transport (30) pour disposer un article sur la surface d'appui (11) du plateau tournant (10),
un premier dispositif de lecture optique (61) disposé dans la direction Z en dessous du plateau tournant (10) et couplé au dispositif de commande (20) pour détecter les dimensions d'un article reposant sur la surface d'appui (11) ainsi qu'un identificateur sur une surface latérale d'un article reposant sur celle-ci, tournée vers la surface d'appui (11),
un deuxième dispositif de lecture optique (62) couplé au dispositif de commande (20) pour détecter la hauteur d'un article reposant sur la surface d'appui (11) ainsi qu'un identificateur sur une surface latérale orthogonale à la surface de support d'un article reposant,
une zone de dépôt (51) disposée en aval du plateau tournant (10) pour une pluralité d'articles, la disposition du plateau tournant ainsi que de la zone de dépôt définissant l'axe longitudinal,
un deuxième dispositif de transport (40) couplé au dispositif de commande (20) avec un moyen de préhension (45) pour des articles, le moyen de préhension (45) pouvant être déplacé au moins dans les directions X et Y au-dessus de la zone de dépôt (51) de telle sorte que des articles peuvent être disposés les uns à côté des autres dans la direction X et/ou Y dans la zone de dépôt,
**caractérisé en ce que** le premier dispositif de transport (30) comprend un moyen de préhension (35) mobile dans les directions X, Y et Z.

2. Dispositif (1) d'identification, de mesure et de positionnement d'articles (2) selon la revendication 1, **caractérisé en ce que** le dispositif comporte un troisième dispositif de lecture optique (63) disposé au-dessus du plateau tournant dans la direction Z et couplé au dispositif de commande (20) pour détecter les dimensions de l'article reposant sur la surface d'appui (11) et/ou un identificateur sur une surface latérale opposée à la surface d'appui (11).

3. Dispositif (1) d'identification, de mesure et de positionnement d'articles (2) selon la revendication 1 ou 2, **caractérisé en ce que** le dispositif comprend un dispositif optique de détection grossière (64) couplé au dispositif de commande pour déterminer l'orientation spatiale d'un article.

4. Dispositif (1) d'identification, de mesure et de positionnement d'articles (2) selon l'une des revendications 1 à 3, **caractérisé en ce qu'**un dispositif de rejet (13) est disposé entre le plateau tournant (10) et la surface de dépôt (51) pour évacuer les articles.

5. Dispositif (1) d'identification, de mesure et de positionnement d'articles (2) selon l'une des revendications 1 à 4, **caractérisé en ce que** le premier et/ou le deuxième dispositif de transport (30, 40) est/sont conçu(s) comme des ventouses mobiles dans les directions X, Y et Z.

6. Dispositif (1) d'identification, de mesure et de positionnement d'articles (2) selon la revendication 5, **caractérisé en ce qu'**une ventouse présente deux têtes d'aspiration (35a, 35b) de dimensions différentes.

7. Dispositif (1) d'identification, de mesure et de positionnement d'articles (2) selon l'une des revendications 1 à 6, **caractérisé en ce que** le deuxième dispositif de transport (40) est conçu comme une pince de serrage mobile au moins dans les directions X et Y.

8. Dispositif (1) d'identification, de mesure et de positionnement d'articles (2) selon l'une des revendications 1 à 7, **caractérisé en ce que** le dispositif (1) présente un dispositif de mise à disposition (70) ainsi qu'un dispositif de détection de position (65) disposé au-dessus du dispositif de mise à disposition dans la direction Z.

9. Procédé d'identification, de mesure et de positionnement d'articles (2), dans lequel
a) un article individuelle est disposée avec un premier dispositif de transport (30) sur une première surface latérale sur une surface d'appui (11) s'étendant dans les directions X et Y d'un plateau tournant (10) optiquement transparent, le premier dispositif de transport (30) comprenant un moyen de préhension (35) mobile dans les directions X, Y et Z, le plateau tournant (10) coopérant avec un entraînement rotatif (12) couplé à un dispositif de commande (20) et pouvant tourner autour d'un axe de rotation s'étendant dans la direction Z, la direction Z s'étendant orthogonalement à la direction X et à la direction Y, et la direction X correspondant à l'axe longitudinal et la direction Y à l'axe transversal du dispositif,
b) avec un premier dispositif de lecture optique (61) disposé en dessous du plateau tournant (10) dans la direction Z, on explore la première surface latérale et on détermine les dimensions X, Y de l'article reposant sur la surface d'appui (11) et on détermine si un identificateur a été déterminé lors de l'exploration de la première surface latérale,
c) avec un deuxième dispositif de lecture optique (62), on explore une deuxième surface latérale réalisée orthogonalement à la première surface latérale, une surface latérale tournée vers le deuxième dispositif de lecture optique et on détermine la dimension Z de l'article reposant sur la surface d'appui et, dans la mesure où aucun identificateur n'a été déterminé pour la première surface latérale, on détermine si un identificateur a été déterminé lors de l'exploration de la deuxième surface latérale, les étapes b) et c) pouvant être exécutées simultanément ou de manière décalée dans le temps,
d) dans le cas où aucun identificateur n'a été déterminé, on fait tourner le plateau tournant de telle sorte qu'une surface latérale suivante, perpendiculaire à la première surface latérale, soit tournée vers le deuxième dispositif de lecture optique et on balaie la surface latérale suivante avec le deuxième dispositif de lecture et on détermine si un identificateur a été déterminé lors du balayage de la surface latérale suivante,
e) l'étape d) est répétée jusqu'à ce que trois surfaces latérales suivantes aient été balayées ou qu'un identificateur ait été déterminé,
f) si aucun identificateur n'a été déterminé, l'article est retiré du plateau tournant et affectée à une autre utilisation,
g) dès qu'un identificateur et toutes les dimensions de l'article posée sont déterminés, un dispositif de commande détermine, à l'aide des dimensions et/ou de l'identificateur, un lieu de dépôt dans une zone de dépôt (51) qui est disposée en aval du plateau tournant,
h) après avoir déterminé le lieu de dépôt, on saisit l'article à l'aide d'un moyen de préhension (45) d'un deuxième dispositif de transport (40) et on la déplace vers le lieu de dépôt, le moyen de préhension (45) étant déplacé à cet effet dans les directions X et/ou Y et Z.

10. Procédé d'identification, de mesure et de positionnement d'articles (2) selon la revendication 9, **caractérisé en ce que**, dans l'étape b) du procédé, avec un troisième dispositif de lecture optique (63) disposé au-dessus du plateau tournant (10) dans la direction Z une surface latérale tournée vers ce dispositif de lecture (63) est balayée et, le cas échéant, les dimensions X, Y de l'article reposant sur la surface d'appui (11) sont déterminées et il est déterminé si un identificateur a été déterminé lors du balayage de la surface latérale.

11. Procédé d'identification, de mesure et de positionnement d'articles (2) selon la revendication 9 ou 10, **caractérisé en ce que** dans l'étape a) du procédé, avant de disposer l'article sur la surface d'appui (11) du plateau tournant (10), on détermine au moyen d'un dispositif de détection grossière (64) l'orientation spatiale de l'article maintenu par le premier dispositif de transport (30).

12. Procédé d'identification, de mesure et de positionnement d'articles (2) selon la revendication 11, **caractérisé en ce que** le dispositif de détection grossière (64) est conçu comme un dispositif de lecture optique et, lors de la détermination de l'orientation spatiale, l'article est balayé pour reconnaître un identificateur.

13. Procédé d'identification, de mesure et de positionnement d'articles (2) selon la revendication 11 ou 12, **caractérisé en ce que**, dans la mesure où, lors de la détermination de l'orientation spatiale, il est reconnu que, pour l'article maintenu par le premier dispositif de transport (30), la plus grande surface latérale n'est pas tournée vers la surface d'appui, l'article est déplacé, après avoir été disposé sur la surface d'appui, au moyen d'un dispositif de transport (30, 40) de telle sorte que l'article repose sur une plus grande surface latérale sur la surface d'appui.
